# EUROPEAN PATENT APPLICATION

(11) **EP 4 752 656 A1**
(43) Date of publication of application: **03.06.2026**
(21) Application number: 23945318.6
(22) Date of filing: 25.10.2023
(51) Int. Cl.: G05B 23/02

(54) **ABNORMALITY DETECTION DEVICE, PLANT SYSTEM, FEATURE INFORMATION GENERATION DEVICE, ABNORMALITY DETECTION METHOD, FEATURE INFORMATION GENERATION METHOD, AND PROGRAM**

(30) Priority: 24.07.2023 JP 2023120220
(71) Applicant: Nippon Steel Corporation, Tokyo 100-8071 (JP)
(72) Inventor: INOUE Masataka, Tokyo 100-8071 (JP)
(74) Representative: Zimmermann & Partner Patentanwälte mbB
(86) International application number: PCT/JP2023/038581
(87) International publication number: WO 2025/022677

(57) **Abstract**

An anomaly detection device includes: a process data obtaining unit that obtains process data of a process having a plurality of process characteristics; and an anomaly detection unit that detects an anomalous state of the process based on a degree of anomaly that indicates a difference between the obtained process data and a normal state of the process represented by feature information that represents a feature of normal process data for each of the process characteristics. The feature information that represents the normal state of the process is optimum feature information for each of the process characteristics found by evaluating a candidate of feature information based on an error between the normal process data and estimated process data calculated using the candidate of feature information, the candidate of feature information being generated for each of the process characteristics from a plurality of items of normal process data obtained when the process is in the normal state.

## Description

### TECHNICAL FIELD

The present disclosure relates to an anomaly detection device that detects an anomaly of a process, a plant system including the anomaly detection device, a feature information generation device that generates feature information used for anomaly detection, an anomaly detection method, a feature information generation method and a program.

### BACKGROUND ART

Techniques of estimating a value of process data obtained in operation of a process of a plant have been proposed. In particular, in a process operated based on the experience or intuition of an operator, a state of the process can be more accurately estimated by estimating a value of a physical quantity that is not measured or estimating a value of a physical quantity obtained under planned operational conditions. Basse on the estimated state of the process, the operation of the process can be improved, and anomalies of the process can be detected, for example.

For example, Patent Document 1 discloses an anomaly sign detection system that detects an anomaly sign based on oscillation waveform data on a target facility. With the anomaly sign detection system according to Patent Document 1, in order to identify a cause of an anomaly in addition to detecting an anomaly sign in a facility, non-negative matrix factorization (referred to also as NMF hereinafter) is used to decompose oscillation spectrogram obtained from the observed oscillation waveform data into frequency components of an original signal source, thereby performing extraction of a feature quantity of an oscillation spectrum and anomaly detection.

### LIST OF PRIOR ART DOCUMENTS

### PATENT DOCUMENT

Patent Document 1: JP2020-123229A

### SUMMARY OF INVENTION

### TECHNICAL PROBLEM

In a process having various operational states, process data having different tendencies can be obtained from various types of sensors or command signals. In particular, in some processes of plants (for example, a steel plant, a chemical plant, a power generation plant and a power plant), a value of measurement of a temperature, a pressure or the like substantially varies with a product type, a raw material, a composition or a demand, for example, in the operation of the same facility. In such a process, if the process data is estimated using the same estimation model, an estimation error may be significant depending on the operational state, and anomalies occurring in the process may be unable to be properly detected.

In addition, in a steel process data that involves a wide variety of operations, data has to be properly tied with a plurality of operational states. If the data is simply finely classified according to the operational state, local tendencies of data dominate the estimation model, and the estimation error increases. On the other hand, if the data is roughly classified regardless of the operational state, data without feature information dominates the estimation model, and again, the estimation error increases. Thus, the estimation model for a steel process requires optimization of data classification that allows the tendencies and features of the operational state to be properly taken into account, although the classification is conventionally intuitively performed by trial and error.

An objective of the present disclosure, which has been made in view of the problem described above, is to provide an anomaly detection device that can accurately detect an anomaly occurring in a process having a plurality of process characteristics, a plant system, a feature information generation device, an anomaly detection method, a feature information generation method and a program.

### SOLUTION TO PROBLEM

To solve the problem described above, the present disclosure provides an anomaly detection device including: a process data obtaining unit that obtains process data of a process having a plurality of process characteristics; and an anomaly detection unit that detects an anomalous state of the process based on a degree of anomaly that indicates a difference between the obtained process data and a normal state of the process represented by feature information that represents a feature of normal process data for each of the process characteristics, wherein the feature information that represents the normal state of the process is optimum feature information for each of the process characteristics found by evaluating a candidate of feature information based on an error between the normal process data and estimated process data calculated using the candidate of feature information, the candidate of feature information being generated for each of the process characteristics from a plurality of items of normal process data obtained when the process is in the normal state.

The anomaly detection unit may obtain a coefficient matrix that represents feature information of the process data by factorizing a matrix that represents the obtained process data with a feature matrix that represents the feature information that represents the feature of the normal process data of the process, and calculate the degree of anomaly based on the matrix that represents the process data, the feature matrix and the coefficient matrix.

The degree of anomaly may be a distance between a value of the process data and a hyperplane that represents the normal state of the process by feature information that represents a feature of normal process data for each of the process characteristics.

The anomaly detection unit may calculate a degree of deviation that represents the degree of anomaly for each operational condition of the process data.

The present disclosure further provides a plant system including: a plant having a process having a plurality of process characteristics; and the anomaly detection device described above, wherein the anomaly detection device calculates the degree of anomaly or the degree of deviation that represents the degree of anomaly for each operational condition of the process data, and the plant system controls the plant based on the degree of anomaly or the degree of deviation.

To solve the problem described above, the present disclosure further provides a feature information generation device including: a feature information generation unit that generates, from a plurality of items of normal process data obtained when a process having a plurality of process characteristics is in a normal state, a candidate of feature information that represents a feature of the normal process data for each of the process characteristics; and a search unit that searches for optimum feature information for each of the process characteristics by evaluating the candidate of feature information based on an error between the normal process data and estimated process data calculated using the candidate of feature information.

The search unit may calculate an evaluation threshold from a quartile of the error, and evaluate the feature information based on the number of items of normal process data that exceeds the evaluation threshold.

The search unit may search for feature information for which the number of items of normal process data that exceeds the evaluation threshold is the smallest as the optimum feature information.

To solve the problem described above, the present disclosure further provides an anomaly detection method including: a process data obtaining step of obtaining process data of a process having a plurality of process characteristics; and an anomaly detection step of detecting an anomalous state of the process based on a degree of anomaly that indicates a difference between the obtained process data and a normal state of the process represented by feature information that represents a feature of normal process data for each of the process characteristics, wherein the feature information that represents the normal state of the process is optimum feature information for each of the process characteristics found by evaluating a candidate of feature information based on an error between the normal process data and estimated process data calculated using the candidate of feature information, the candidate of feature information being generated for each of the process characteristics from a plurality of items of normal process data obtained when the process is in the normal state.

To solve the problem described above, the present disclosure further provides a feature information generation method including: a feature information generation step of generating, from a plurality of items of normal process data obtained when a process having a plurality of process characteristics is in a normal state, a candidate of feature information that represents a feature of the normal process data for each of the process characteristics; and a search step of searching for optimum feature information for each of the process characteristics by evaluating the candidate of feature information based on an error between the normal process data and estimated process data calculated using the candidate of feature information.

To solve the problem described above, the present disclosure further provides a program that makes a computer function as an anomaly detection device including: a process data obtaining unit that obtains process data of a process having a plurality of process characteristics; and an anomaly detection unit that detects an anomalous state of the process based on a degree of anomaly that indicates a difference between the obtained process data and a normal state of the process represented by feature information that represents a feature of normal process data for each of the process characteristics, wherein the feature information that represents the normal state of the process is optimum feature information for each of the process characteristics found by evaluating a candidate of feature information based on an error between the normal process data and estimated process data calculated using the candidate of feature information, the candidate of feature information being generated for each of the process characteristics from a plurality of items of normal process data obtained when the process is in the normal state.

To solve the problem described above, the present disclosure further provides a program that makes a computer function as a feature information generation device including: a feature information generation unit that generates, from a plurality of items of normal process data obtained when a process having a plurality of process characteristics is in a normal state, a candidate of feature information that represents a feature of the normal process data for each of the process characteristics; and a search unit that searches for optimum feature information for each of the process characteristics by evaluating the candidate of feature information based on an error between the normal process data and estimated process data calculated using the candidate of feature information.

### ADVANTAGEOUS EFFECTS OF INVENTION

As described above, according to the present disclosure, for a process having a plurality of process characteristics, an anomalous state of the process is detected based on the degree of anomaly that indicates the difference between the process data and the normal state of the process represented by feature information for each process characteristic. Thus, anomalies occurring in the process can be accurately detected.

### BRIEF DESCRIPTION OF DRAWINGS

[Figure 1] Figure 1 is a conceptual diagram showing a normal state of a process represented by optimum feature information obtained for each process characteristic.
[Figure 2] Figure 2 is a block diagram showing an example of a configuration of an anomaly detection system according to the present disclosure.
[Figure 3] Figure 3 is a flowchart showing an overview of a feature information generation method according to the present disclosure.
[Figure 4] Figure 4 is a flowchart showing an example of the feature information generation method using NMF.
[Figure 5] Figure 5 is a diagram for illustrating a past data matrix Y.
[Figure 6] Figure 6 is a diagram for illustrating a relationship between the past data matrix Y and a matrix product of a coefficient matrix Φ and an operational state matrix X.
[Figure 7] Figure 7 is a diagram for illustrating a conception of a relationship between a calculated Euclidean norm value for an estimated error and a Euclidean norm value for an estimated error for a plurality of items of normal process data used for generation of candidates of feature information.
[Figure 8] Figure 8 is a flowchart showing an overview of an anomaly detection method according to the present disclosure.
[Figure 9] Figure 9 is a flowchart showing an example of the anomaly detection method using NMF.
[Figure 10] Figure 10 is a conceptual diagram showing a degree of deviation represented by a vector.
[Figure 11] Figure 11 shows an example of numeric values for illustrating a feature information generation method according to the present disclosure, in which the past data matrix Y is approximated as a matrix product of the coefficient matrix Φ and the matrix X.
[Figure 12] Figure 12 is a graph showing candidates of feature information in the example of numeric values in Figure 11.
[Figure 13] Figure 13 is a diagram for illustrating calculation of an evaluation threshold in the example of numeric values in Figure 11.
[Figure 14] Figure 14 is a diagram for illustrating calculation of a degree of anomaly in the example of numeric values in Figure 11.
[Figure 15] Figure 15 is a block diagram showing an example of a hardware configuration of an information processing device that functions as the feature information generation device or the anomaly detection device according to the present disclosure.

### DESCRIPTION OF EMBODIMENTS

In the following, preferred embodiments of the present disclosure will be described in detail with reference to the accompanying drawings. Note that in this specification and the drawings, components having substantially the same functions or configurations are denoted by the same reference numerals, and redundant descriptions thereof will be omitted.

### [1. System Configuration]

An anomaly detection system according to the present disclosure is a system that detects an anomaly that occurs in a process based on process data obtained from the process. The process in the present disclosure is a process that has a plurality of process characteristics. The process data refers to data obtained in operation of the process, such as an operational condition of a facility, a product type, a measurement value from a sensor or the like. The process characteristic refers to a tendency of the process data obtained in the process. In some processes, such as processes in steel plants, for example, the value of the process data obtained in operation of the same facility may significantly vary depending on the product type or the like. For example, in a casting process in a continuous casting facility, the way of occurrence of solidification anomaly in a solidifying shell varies with the electromagnetic stirring condition or the kind of a powder. Such a process is referred to as a process having a plurality of process characteristics.

The anomaly detection system according to the present disclosure generates feature information that represents a feature of normal process data obtained when the process is in a normal state, as an index for detecting a process anomaly. The feature information as an index is generated from normal process data obtained in a past operation. For each process characteristic, one item of optimum feature information that represents a possible feature of normal process data of the process characteristic is generated as feature information as an index.

The anomaly detection system obtains process data from a process while anomaly detection system is monitoring whether an anomaly occurs in the process, for example. The anomaly detection system detects an anomalous state of the process based on the degree of anomaly of the process at the time when the process data is obtained. Here, the degree of anomaly is a value that indicates how the obtained process data deviates from the normal state of the process represented by the generated feature information and indicates a difference between the process data and the normal state of the process represented by the feature information. The anomaly detection system detects an anomaly of a process by determining how the process at the time when the process data is obtained deviates from the normal state based on the feature information corresponding to the process characteristics at the time when the process data is obtained. In the process having a plurality of process characteristics, the accuracy of the anomaly detection can be improved by detecting an anomaly of a process based on feature information corresponding to process characteristics of obtained process data.

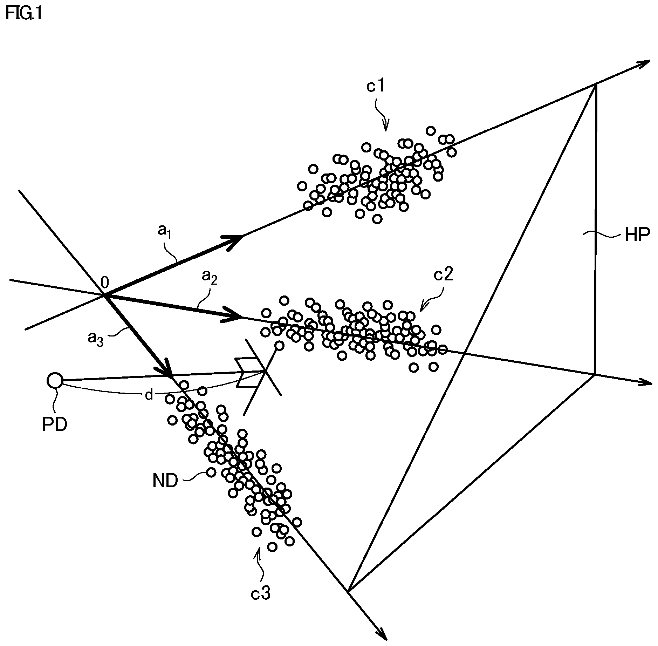

Figure 1 is a conceptual diagram showing a normal state of a process represented by optimum feature information obtained for each process characteristic. The conceptual diagram of Figure 1 shows a normal state of a process having three process characteristics. Normal process data ND forms clusters c1, c2 and c3 on a process characteristic basis. The anomaly detection system determines, for each of the clusters c1, c2 and c3, feature information that represents a primary feature of the normal process data and produces a space (normal space) that represents a normal state of the process as a whole. The feature information for each of the clusters c1, c2 and c3 includes directional vectors a₁, a₂ and a₃ that define a normal space, and if process data lies in the normal space defined by the directional vectors a₁, a₂ and a₃, the process is regarded as being in the normal state. In other words, if process data lies outside the normal space, the process is likely to be in the anomalous state.

A degree of anomaly d calculated by the anomaly detection system according to the present disclosure represents how determination-target process data PD deviates from a hyperplane that indicates a boundary of the normal space in terms of minimum distance from the normal space. A higher degree of anomaly d indicates that the determination-target process data PD more significantly lies outside the normal space and the anomalous state of the process is more significant. The anomaly detection system according to the present disclosure detects an anomaly of a process by using feature information to represent a polyhedron with the smallest number of dimensions that rationally describes the relationship of process data at the time when the process is normal.

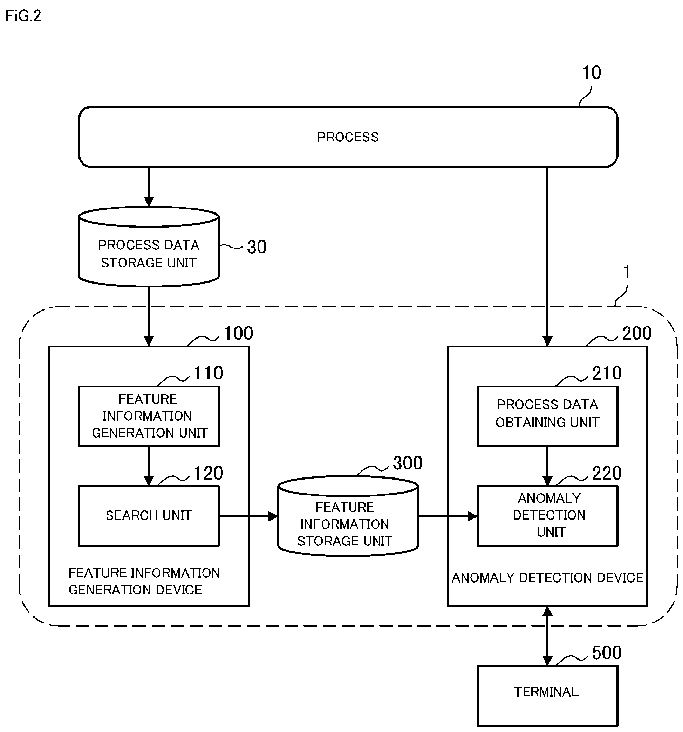

In the following, a configuration of an anomaly detection system 1 according to the present disclosure will be described with reference to Figure 2. Figure 2 is a block diagram showing an example of the configuration of the anomaly detection system 1 according to the present disclosure. As shown in Figure 2, the anomaly detection system 1 according to the present disclosure includes a feature information generation device 100, an anomaly detection device 200 and a feature information storage unit 300.

### [1-1. Feature Information Generation Device]

The feature information generation device 100 generates feature information that represents a feature of normal process data obtained from a process 10 having a plurality of process characteristics when the process 10 is in the normal state. As shown in Figure 2, the feature information generation device 100 has a feature information generation unit 110 and a search unit 120.

### (Feature Information Generation Unit)

For each process characteristic, the feature information generation unit 110 generates a candidate of feature information that represents a feature of normal process data from a plurality of items of normal process data. The feature information generation unit 110 obtains the normal process data from a process data storage unit 30 that stores process data obtained in a past operation. The feature information generation unit 110 obtains normal process data used for generating a candidate of feature information from the process data storage unit 30. The feature information generation unit 110 may obtain a plurality of items of process data obtained in a predetermined period or may obtain a predetermined number of items of process data.

The feature information generation unit 110 according to the present disclosure obtains feature information by performing non-negative matrix factorization (referred to also as NMF hereinafter) on the obtained normal process data. NMF is an algorithm that decomposes one non-negative matrix into a product of two non-negative matrices. The feature information generation unit 110 obtains a matrix that represents feature information for each process characteristic (referred to as a feature matrix hereinafter) by decomposing the normal process data into non-negative matrices using NMF. The generation process for the feature information will be described in detail later. The feature information generation unit 110 outputs the obtained candidate of feature information for each process characteristic to the search unit 120.

### (Search Unit)

The search unit 120 evaluates the candidates of feature information based on errors between estimated process data calculated using the candidates of feature information and the normal process data, and searches for optimum feature information for each process characteristic. The search by the search unit 120 is to determine one optimum item of feature information by evaluating a plurality of candidates of feature information. The optimum feature information searched for is feature information that represents a primary feature of the normal process data. That is, the search unit 120 searches for feature information that represents a feature that applies to as large a number of items of process data obtained when the process is in the normal state as possible. The search unit 120 evaluates the candidates of feature information for the process characteristics altogether. That is, the search unit 120 evaluates a plurality of combinations of candidates of feature information for each process characteristic and eventually searches for optimum feature information for each process characteristic. In this way, feature information for each process characteristic that is optimum for the entire process is determined.

The estimated process data is calculated based on the candidates of feature information obtained from the normal process data and therefore is considered to represent the normal process data. Therefore, the error between the estimated process data and the normal process data represents how the feature represented by the candidate of feature information used for calculation of the estimated process data deviates from the feature of the actual normal process data. A larger error indicates a greater deviation of the feature represented by the candidate of feature information from the feature of the normal process data.

Based on the error between the estimated process data and the normal process data described above, the search unit 120 sets an evaluation threshold, for example, and evaluates the candidates of feature information using the evaluation threshold. The evaluation threshold can be calculated from quartiles of errors between the estimated process data and the normal process data. The quartiles are values that split items of data arranged in ascending order of value into four equal parts. The smallest quartile is referred to as a first quartile, the second smallest quartile is referred to as a second quartile (that is, a median), and the largest quartile is referred to as a third quartile. The first quartile is a value located at 25% of all data, and the third quartile is a value located at 75% of all data. The quartiles are values set based on the median and therefore useful for setting a threshold based on a primary feature of process data. Furthermore, the quartiles are values useful for grasping the variation of data values and are less likely to be affected by an outlier. Thus, the search unit 120 sets an evaluation threshold for distinguishing between the normal process data and process data that deviates from the normal process data by using quartiles of errors.

For example, the search unit 120 may use the sum of the difference between the third quartile and the median and the third quartile as the evaluation threshold. Such an evaluation threshold means a value that is expected to classify most normal process data as normal process data. The evaluation threshold is considered to more properly evaluate whether process data is normal process data or not as the number of items of normal process data for which the error calculated between the normal process data and the estimated process data from the candidate of feature information exceeds the evaluation threshold decreases. The search unit 120 evaluates the candidates of feature information using such an evaluation threshold, and searches for a candidate of feature information with the smallest number of items of normal process data for which the error exceeds the evaluation threshold, as optimum feature information.

The search unit 120 records the optimum feature information for each process characteristic in the feature information storage unit 300.

### [1-2. Anomaly Detection Device]

The anomaly detection device 200 detects an anomaly state of the process 10 from the determination-target process data using feature information on the process 10. As shown in Figure 2, the anomaly detection device 200 has a process data obtaining unit 210 and an anomaly detection unit 220.

### (Process Data Obtaining Unit)

The process data obtaining unit 210 obtains determination-target process data. As the determination-target process data, the process data obtaining unit 210 may obtain process data obtained from a sensor or the like provided in a facility in operation of the process 10, for example, or may obtain process data input from a terminal 500. The process data obtaining unit 210 outputs the obtained determination-target process data to the anomaly detection unit 220.

### (Anomaly Detection Unit)

The anomaly detection unit 220 detects an anomaly state of the process 10 based on the degree of anomaly that indicates the difference between the obtained determination-target process data and the normal state of the process 10 represented by the feature information that represents a feature of the normal process data for each process characteristic. The degree of anomaly is represented by a distance between the value of the determination-target process data and the hyperplane that represents the normal state of the process 10 by the feature information that represents the feature of the normal process data for each process characteristic. The higher the degree of anomaly, the more significantly the process 10 at the time when the determination-target process data is obtained deviates from the normal state, and the more likely to have occurred an anomaly is.

For example, when the feature information is obtained using NMF, the anomaly detection unit 220 may factorize the matrix that represents the determination-target process data with a feature matrix that represents the feature information to obtain a coefficient matrix that represents the feature information of the process data, and use these matrices to calculate the degree of anomaly, which is the difference between the determination-target process data and the feature information. By using NMF, the degree of anomaly can be automatically determined based on feature information that corresponds to a process characteristic of the determination-target process data among a plurality of process characteristics of the process 10. Furthermore, the anomaly detection unit 220 may calculate a degree of deviation that represents the degree of anomaly for each operational condition of the process data. The process of calculating the degree of anomaly and the degree of deviation will be described in detail later.

The anomaly detection unit 220 outputs the calculated degree of anomaly to the terminal 500, for example. When the degree of deviation is calculated, the anomaly detection unit 220 may output the degree of deviation to the terminal 500, in addition to the degree of anomaly.

Furthermore, the anomaly detection unit 220 may detect an anomaly of the process 10 by determining whether the calculated degree of anomaly exceeds an evaluation threshold or not. When the degree of anomaly exceeds the evaluation threshold, there is a possibility that an anomaly has occurred in the process 10. In such a case, the anomaly detection unit 220 may notify the terminal 500 that there is a possibility that an anomaly has occurred in the process 10.

Note that the terminal 500 is an information process device that receives information from a user and presents information to the user. The terminal 500 may a personal computer or a tablet terminal, for example. On the terminal 500, the user can check the value estimated by the anomaly detection device 200 and can take a measure to deal with any anomaly of the process 10.

An example configuration of the anomaly detection system 1 according to the present disclosure has been described above. Note that although Figure 2 shows an example in which the feature information generation device 100, the anomaly detection device 200 and the feature information storage unit 300 are separate devices, the present disclosure is not limited to such an example. For example, at least two of the feature information generation device 100, the anomaly detection device 200 and the feature information storage unit 300 may be integrated into one device. For example, the anomaly detection device 200 may include the feature information generation unit 110 and the search unit 120 of the feature information generation device 100 as processing units for generating feature information that represents the normal state of a process. Alternatively, the feature information generation device 100 may be formed by two or more devices, or the anomaly detection device 200 may be formed by two or more devices.

Furthermore, a program for implementing the function of each of the feature information generation unit 110 and the search unit 120 of the feature information generation device 100 and the process data obtaining unit 210 and the anomaly detection unit 220 of the anomaly detection device 200 may be created and installed in a computer or the like. The computer implements each function of the feature information generation device 100 and the anomaly detection device 200 by a central processing unit (CPU) or the like of the computer executing the installed program. Furthermore, a computer-readable recording medium storing such a program can also be provided. The recording medium may be a magnetic disk, an optical disk, a magnetooptical disk or a flash memory, for example. Furthermore, the program described above may be distributed over a network, for example, rather than being stored in a recording medium.

### [2. Process Anomaly Detection]

In the anomaly detection system 1, the feature information generation device 100 performs a feature information generation method for generating feature information that represents a feature of normal process data obtained from the process 10 in a normal state, and the anomaly detection device 200 performs an anomaly detection method for detecting an anomaly in the process 10 from determination-target process data based on the feature information on the process 10. Each of the feature information generation method and the anomaly detection method can be implemented by a computer executing a program including the steps described below. In the following, the feature information generation method and the anomaly detection method according to the present disclosure will be described.

### [2-1. Feature Information Generation Method]

### (2-1-1. Overview)

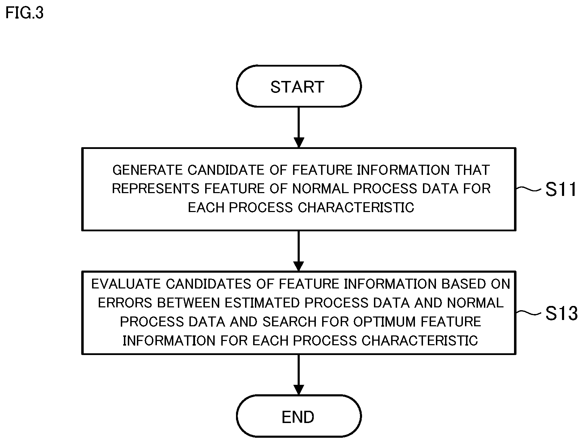

Figure 3 is a flowchart showing an overview of the feature information generation method according to the present disclosure. In the feature information generation method according to the present disclosure, as shown in Figure 3, the feature information generation unit 110 first generates, for each process characteristic, a candidate of feature information that represents a feature of normal process data from a plurality of items of normal process data (S11: feature information generation step). Then, the search unit 120 evaluates the candidates of feature information based on errors between the normal process data and estimated process data calculated using the candidates of feature information generated in step S11, and searches for optimum feature information for each process characteristic (S13: search step).

More specifically, in the feature information generation method according to the present disclosure, the feature information is generated according to the non-negative matrix factorization (NMF), for example. NMF is an algorithm that decomposes one non-negative matrix into a product of two non-negative matrices. By decomposing the normal process data used for feature information generation into non-negative matrices by using NMF, feature information for a plurality of process characteristics of the process can be automatically obtained. In the following, an example of the feature information generation method using NMF will be described in detail.

### (2-1-2. Feature Information Generation Method Using NMF)

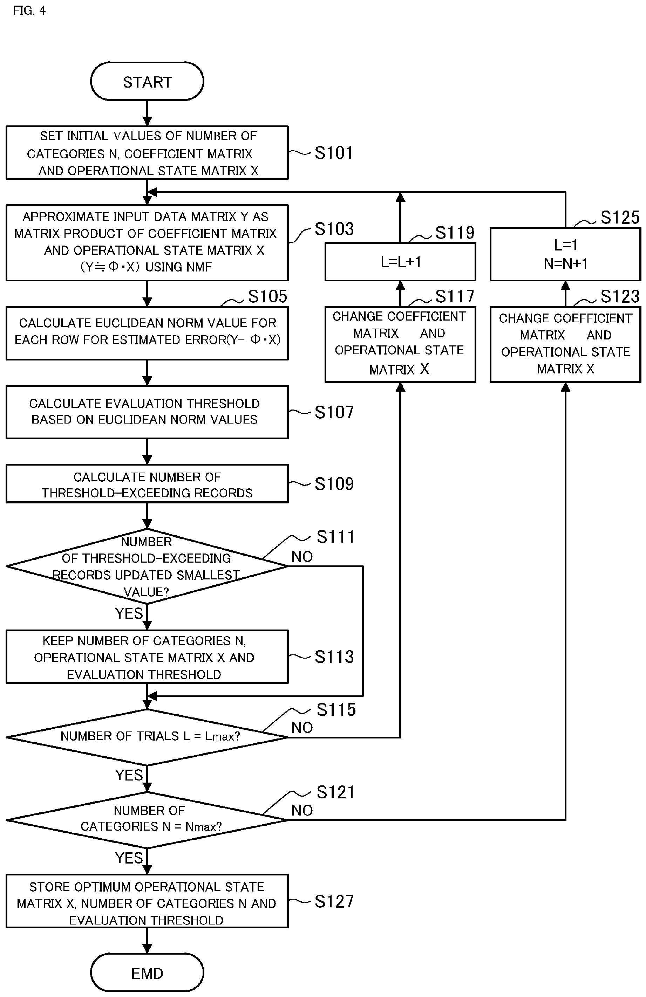

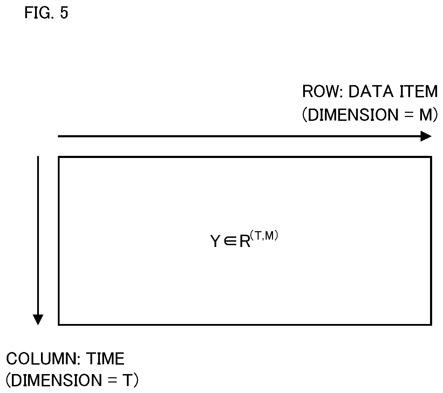

Figure 4 is a flowchart showing an example of the feature information generation method using NMF. Note that in using NMF, past process data recorded in the process data storage unit 30 is represented by a matrix Y as shown in Figure 5. The matrix Y is a matrix with T rows and M columns, the rows indicating time and the columns indicating data items of past process data (Y ∈ R^{(T, M)}). The values of the data items in each row of the matrix Y are values of process data obtained at the relevant point in time and are associated by the point in time. In the following, the matrix Y will be referred to also as a "past data matrix Y". Note that the process data at each point in time in the past data matrix Y does not have to be arranged in time series. Furthermore, the process data of the past data matrix Y may be process data obtained at regular intervals or data obtained at irregular intervals. Furthermore, the process data of the past data matrix Y may be continuous data or discontinuous data.

### (S101: Initial Value Setting)

In the feature information generation method using NMF, as shown in Figure 4, the feature information generation unit 110 first sets initial values of the number of categories N of the process data, a coefficient matrix Φ and an operational state matrix X (S101).

The number of categories N is the number of classes of the process data to be classified. The initial value and the upper limit value of the number of categories N can be arbitrarily set. For example, the initial value N₀ of the number of categories N may be 2, and the upper limit value Nₘₐₓ of the number of categories may be 10.

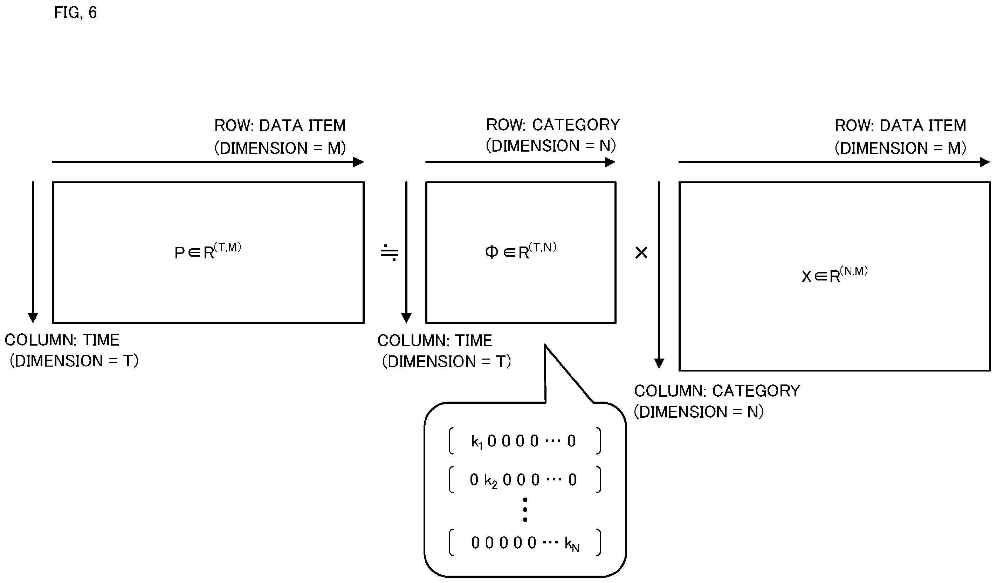

The coefficient matrix Φ and the operational state matrix X are non-negative matrices generated by decomposing the past data matrix Y using NMF, as shown in Figure 6. The coefficient matrix Φ is a matrix with T rows and N columns, the rows indicating time and the columns indicating the categories (that is, classes) of the process data (Φ ∈ R^{(T, N)}). The coefficient matrix Φ is referred to also as a feature quantity matrix. The operational state matrix X is a matrix with N rows and M columns, the rows indicating the categories of the process data and the columns indicating the data items of the process data (Φ ∈ R^{(N, M)}). The operational state matrix X is referred to as a feature matrix. The initial values of the coefficient matrix Φ and the operational state matrix X can be randomly set, for example.

Furthermore, the feature information generation unit 110 sets an upper limit value of the number of trials L as the initial setting. For example, the upper limit value Lₘₐₓ of the number of trials may be 100. Note that the number of trials L starts with 1.

### (S103: Generation of Feature Information)

Then, the feature information generation unit 110 obtains past process data recorded in the process data storage unit 30, and approximates the past data matrix Y representing past process data as a matrix product (Y ≈ Φ•X) of the coefficient matrix Φ and the operational state matrix X (S103). Here, the past process data is normal process data obtained when the process is in the normal state.

The coefficient matrix Φ is typically formed by sparse matrix elements as shown in Figure 6. Provided that each row of the coefficient matrix Φ includes matrix elements Φⱼ (j = 1, ..., T), the feature information generation unit 110 classifies (clusters) the values of the data items through association by the matrix elements Φⱼ and the scalar product. Here, the matrix element Φⱼ represents a degree of contribution to each process characteristic of the process at each point in time. That is, each column of matrix elements Φⱼ represents a class corresponding to a process characteristic. Note that the operational state matrix X represents features of values of process data that are independent of time and do not vary with time. The operational state matrix X can be said as feature information that represents features of normal process data obtained from the process 10. Each row of the operational state matrix X indicates directional vectors, which are feature information of normal process data having similar process characteristics. The feature information that represents process characteristics of the process 10 are directional vectors a₁, a₂ and a₃ shown in Figure 1, for example, each of which represents a proportional relationship of normal process data for the relevant process characteristic.

Note that since each column of matrix elements Φⱼ of the coefficient matrix Φ obtained using NMF represents a class that corresponds to a process characteristic, the process data is considered to belong to the class of the column having the largest value. Thus, it can be seen that each matrix element Φⱼ of the coefficient matrix Φ represents a class to which the process data at the relevant point in time belongs, and the process characteristic can be automatically identified.

Once the feature information generation unit 110 represents the past normal process data as a matrix product of the coefficient matrix Φ and the operational state matrix X, the feature information generation unit 110 outputs the coefficient matrix Φ and the operational state matrix X to the search unit 120. The operational state matrix X output from the feature information generation unit 110 to the search unit 120 in this step is a candidate of feature information.

### (S105-S121: Search for Optimum Feature Information)

Then, the search unit 120 evaluates the candidates of feature information input from the feature information generation unit 110 and searches for optimum feature information. The search unit 120 evaluates the candidates of feature information based on errors between the normal process data and estimated process data calculated using the candidates of feature information.

Specifically, the search unit 120 first calculates the errors between the normal process data and the estimated process data calculated using the candidates of feature information, and calculates a Euclidean norm value for each row of the matrix (S105). The error between the estimated process data and the normal process data is represented by the difference between the past data matrix Y and the matrix product of the coefficient matrix Φ and the operational state matrix X (Y - Φ•X). The search unit 120 determines the Euclidean norm value for each row of the matrix that represents the error. Each Euclidean norm value represents the magnitude of the vector data represented by the row, and the greater the Euclidean norm value, the greater the value of the magnitude of the vector data.

Based on the calculated Euclidean norm value, the search unit 120 calculates an evaluation threshold for evaluating whether the candidate of feature information properly represents a primary feature of the normal process data or not (S107). In this example, the search unit 120 calculates the evaluation threshold from quartiles of errors between the estimated process data and the normal process data. As described above, since the quartiles are values set based on the median, the quartiles are useful for setting of a threshold based on a primary feature of process data. For example, the search unit 120 calculates the sum of the difference between the third quartile and the median and the third quartile, and uses the sum as an evaluation threshold. Such an evaluation threshold means a value that is expected to classify most normal process data as normal process data.

Then, the search unit 120 evaluates the candidates of feature information by using the evaluation threshold calculated in step S107. Specifically, the search unit 120 calculates the number of Euclidean norm values that exceed the evaluation threshold (referred to also as the number of threshold-exceeding records hereinafter) among the Euclidean norm values calculated in step S105 (S109), and evaluates the candidates of feature information based on the number of threshold-exceeding records (S111).

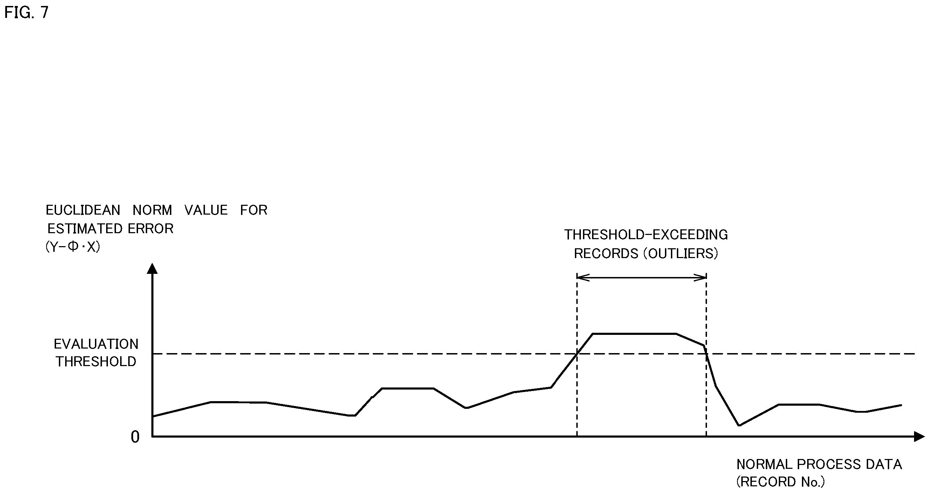

Figure 7 shows a conception of the relationship between the calculated Euclidean norm value for the estimated error and the Euclidean norm value for the estimated error for a plurality of items of normal process data used for generation of candidates of feature information. In the example in Figure 7, some of a plurality of items of normal process data are threshold-exceeding records for which the Euclidean norm value of the estimated error exceeds the evaluation threshold. Since the evaluation threshold means a value that can classify most normal process data as normal process data, when the candidate of feature information properly represents a feature of the normal process data, all the Euclidean norm values for the estimated error are equal to or less than the evaluation threshold.

In other words, any threshold-exceeding record for which the Euclidean norm value for the estimated error exceeds the evaluation threshold deviates from the feature of the normal process data represented by the candidate of feature information. That is, the threshold-exceeding record is normal process data that is determined to deviate from the normal process data based on the evaluation threshold, despite being normal process data. The threshold-exceeding record can also be said as process data that is falsely detected based on the evaluation threshold as process data obtained when the process is in the anomalous state. Therefore, the less the threshold-exceeding records, the more properly the candidate of feature information used for calculation of the evaluation threshold represents the feature of the normal process data.

Thus, in step S111, the search unit 120 determines whether the number of threshold-exceeding records has updated the smallest value or not, thereby evaluating whether the candidate of feature information currently evaluated more properly represents a primary feature of the normal process data than feature information evaluated in the past. When the number of threshold-exceeding records has updated the smallest value (S111: YES), the search unit 120 keeps the number of categories N, the operational state matrix X and the evaluation threshold of the process data of the current evaluation (S113). On the other hand, when the number of threshold-exceeding records has not updated the smallest value (S111: NO), the search unit 120 proceeds to processing of step S115.

Once the process up to step S113 ends, the search unit 120 determines whether the number of trials L has reached the upper limit Lₘₐₓ of the number of trials or not (S115). When the number of trials L has not reached the upper limit Lₘₐₓ of the number of trials (S115: NO), the search unit 120 changes the coefficient matrix Φ and the operational state matrix X (S117), and increments the number of trials L by 1 (S119). After that, the process from steps S103 to S115 is repeated.

On the other hand, when the number of trials L has reached the upper limit Lₘₐₓ of the number of trials (S115: YES), the search unit 120 determines whether the number of categories N of the process data has reached the upper limit Nₘₐₓ of the number of categories or not (S121). When the number of categories N of the process data has not reached the upper limit Nₘₐₓ of the number of categories (S121: NO), the search unit 120 changes the coefficient matrix Φ and the operational state matrix X (S123), resets the number of trials L to 1, and increments the number of categories N by 1 (S125). After that, the process from steps S103 to S121 is repeated.

When the number of categories N of the process data has reached the upper limit Nₘₐₓ of the number of categories (S121: YES), the search unit 120 stores the operational state matrix X, the number of categories N and the evaluation threshold that are currently retained in the feature information storage unit 300 as optimum operational state matrix X, number of categories N and evaluation threshold (S127). The optimum operational state matrix X is optimum feature information found among candidates of feature information.

An example of the feature information generation method using NMF according to the present disclosure has been described above. According to the present disclosure, by decomposing the normal process data used for generation of feature information into non-negative matrices using NMF, feature information on a plurality of process characteristics of the process can be automatically obtained. Furthermore, a large-scale system involves many types of process data obtained in operation of a process, such as operational conditions of facilities, product types and measurement values from sensors or the like, and the operational state matrix X represented by these items of process data is not always uniquely determined. In such a large-scale system, it is useful to determine an optimum operational state matrix X by searching as in the feature information generation method according to the present disclosure.

### [2-2. Anomaly Detection Method]

### (2-2-1. Overview)

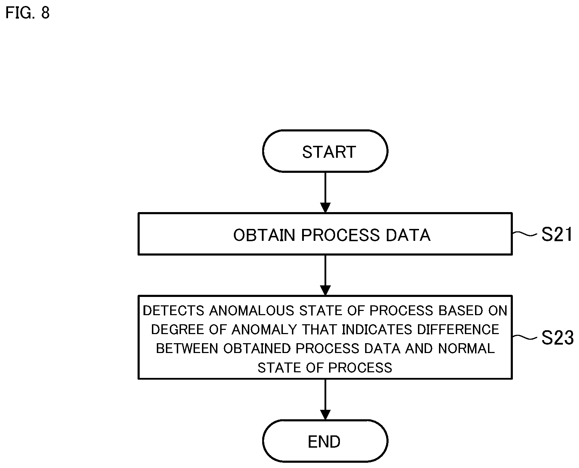

Figure 8 is a flowchart showing an overview of the anomaly detection method according to the present disclosure. In the anomaly detection method according to the present disclosure, as shown in Figure 8, the process data obtaining unit 210 first obtains determination-target process data (S21: process data obtaining step). Then, the anomaly detection unit 220 detects an anomalous state of the process 10 based on the degree of anomaly that indicates the difference between the obtained determination-target process data and the normal state of the process 10 represented by the feature information that represents a feature of normal process data for each process characteristic (S23: anomaly detection step).

Here, the feature information that represents the normal state of the process can be obtained in the feature information generation method shown in Figure 3 described above. That is, the feature information that represents the normal state of the process (feature information that represents a feature of normal process data for each process characteristic described above) is optimum feature information for each process characteristic found by evaluating a candidate of feature information generated for each process characteristic from a plurality of items of normal process data obtained when the process is in the normal state based on the error between the normal process data and estimated process data calculated using the candidate of feature information.

More specifically, in the anomaly detection method according to the present disclosure, for example, the distance between the value of the obtained process data and the hyperplane that represents the normal state of the process 10 by the feature information obtained using the non-negative matrix factorization (NMF) is calculated as the degree of anomaly. By using NMF, the degree of anomaly can be automatically determined based on feature information that corresponds to the process characteristic of the determination-target process data among a plurality of process characteristics of the process 10 without identifying the process characteristic of the determination-target process data. In the following, an example of the anomaly detection method using NMF will be described in detail.

### (2-2-2. Anomaly Detection Method Using NMF)

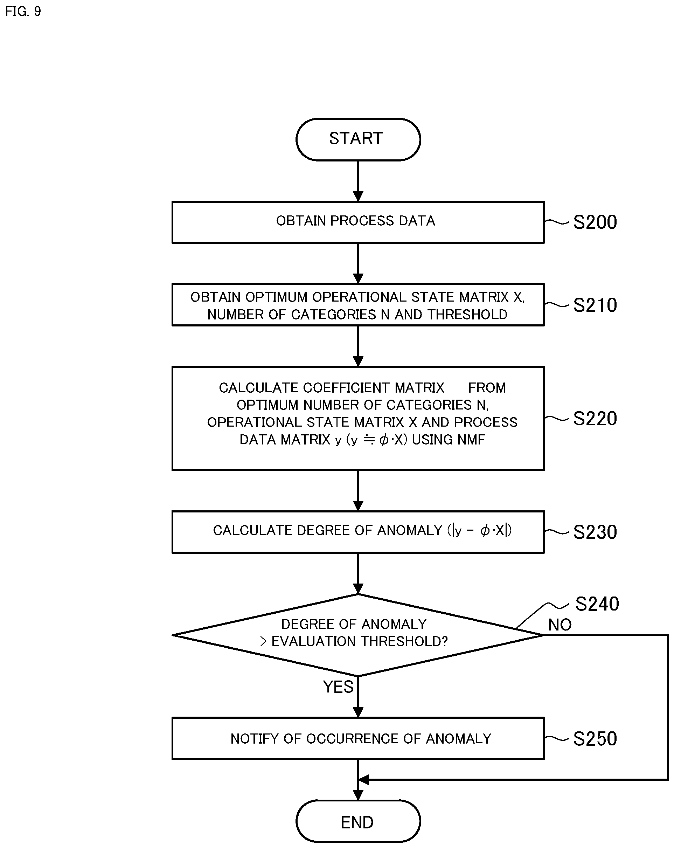

Figure 9 is an example of a flowchart showing the anomaly detection method using NMF.

### (S200: Obtaining of Process Data)

First, the process data obtaining unit 210 obtains determination-target process data for which the degree of anomaly is calculated, in order to detect an anomaly of the process 10 (S200). For example, the process data obtaining unit 210 may obtain process data obtained in operation of the process 10 as determination-target process data or may obtain process data input from the terminal 500 as determination-target process data. The process data obtaining unit 210 outputs the obtained determination-target process data to the anomaly detection unit 220.

### (S210-S250: Anomaly Detection Process)

Based on the obtained determination-target process data, the anomaly detection unit 220 calculates the degree of anomaly to detect an anomalous state of the process 10.

First, the anomaly detection unit 220 obtains feature information on the process 10 from the feature information storage unit 300 (S210). Specifically, the anomaly detection unit 220 obtains optimum operational state matrix X, number of categories N and evaluation threshold for the process 10 generated by the feature information generation device 100 from the feature information storage unit 300.

The anomaly detection unit 220 then calculates, using NMF, a coefficient matrix ϕ from the number of categories N and the operational state matrix X obtained in step S210 and a process data matrix y that represents the determination-target process data obtained in step S200 (S220). Here, the process data matrix y is a matrix with one row and M columns including an array of values of data items (y ∈ R^{(l, M)}). The coefficient matrix ϕ is a matrix with one row and N columns that corresponds to any of matrix elements Φⱼ (j = 1, ..., T) forming the coefficient matrix Φ (φ ∈ R(^{l, N)})^{.}

The coefficient matrix ϕ is determined from the input process data matrix y and the operational state matrix X. Once the coefficient matrix ϕ is determined, the anomaly detection unit 220 can identify, from the column having the largest value, the class to which the process data to be estimated belongs. By identifying the class to which the process data to be estimated belongs, the process characteristic thereof can be identified. The anomaly detection unit 220 calculates the coefficient matrix ϕ that represents feature information of the process data by approximating the process data matrix y as a matrix product of the coefficient matrix ϕ and the operational state matrix X, which is a feature matrix (y ≈ ϕ•X).

Note that since NMF is used in this example, the coefficient matrix ϕ needs to be a non-negative matrix. To ensure that the coefficient matrix ϕ is a non-negative matrix, the approach of approximating the process data matrix y as a matrix product of the coefficient matrix ϕ and the operational state matrix X is used, instead of multiplying both sides of the matrix product (y ≈ Φ•X) of the coefficient matrix ϕ and the operational state matrix X by a pseudo inverse matrix of the operational state matrix X from right side.

Furthermore, the anomaly detection unit 220 calculates the absolute value of a Reconstruction Error (|y - φ•X|) as the degree of anomaly (S230). The degree of anomaly represented by the Reconstruction Error represents the distance between a hyperplane (ϕ•X) that represents the normal state of the process 10 and the value of the determination-target process data (y). The anomaly detection unit 220 then determines whether the calculated degree of anomaly exceeds the evaluation threshold obtained in step S210 or not (S240). When the degree of anomaly is equal to or less than the evaluation threshold (S240: NO), the anomaly detection unit 220 determines that the determination-target process data is normal process data and no anomaly is occurring in the process 10, and ends the process shown in Figure 9.

On the other hand, when the degree of anomaly exceeds the evaluation threshold (S240: YES), the anomaly detection unit 220 evaluates that the determination-target process data is not normal process data and there is a possibility that an anomaly is occurring in the process 10. In this case, the anomaly detection unit 220 notifies the terminal 500 that there is a possibility that an anomaly is occurring in the process 10 (S250).

In this case, the anomaly detection unit 220 may notify the terminal 500 of not only the degree of anomaly but also the degree of deviation, which represents the degree of anomaly for each operational condition of the process data. The degree of deviation may be represented by the Reconstruction Error (y - ϕ•X), for example. Since the Reconstruction Error is a component representation of the degree of anomaly on a data item basis, an operational condition of the process data that causes an increase of the degree of anomaly can be identified.

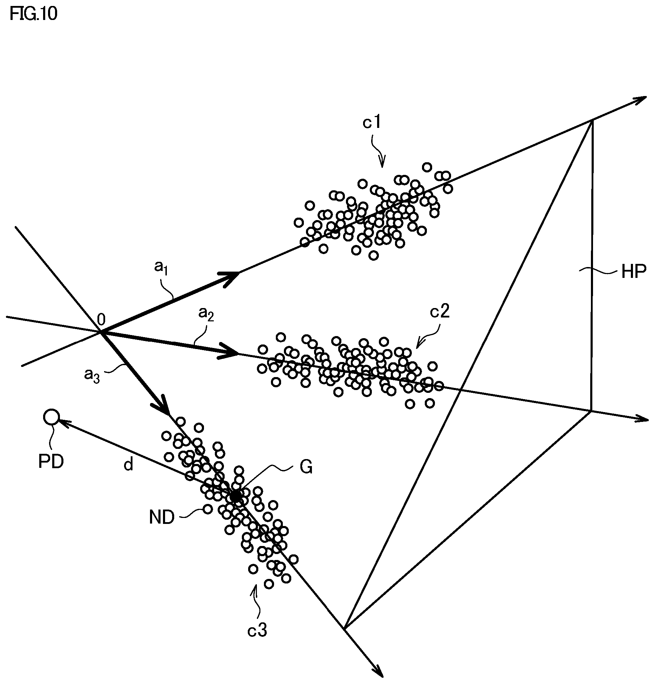

Furthermore, the degree of deviation may be represented by a vector from the center of gravity of the normal process data to the determination-target process data, for example. In this case, the center of gravity of the normal process data is the center of gravity of the normal process data having the same process characteristic as the determination-target process data. Figure 10 is a conceptual diagram showing the degree of deviation represented by a vector. As shown in Figure 10, when the determination-target process data PD has the same process characteristic as the normal process data ND of the cluster c3, the anomaly detection unit 220 determines the vector from a center of gravity G to the process data PD as the degree of deviation, where the center of gravity G is an average of the normal process data ND of the cluster c3. Note that the magnitude of the vector may be used as the degree of anomaly d.

An example of the anomaly detection method using NMF according to the present disclosure has been described above.

### [2-3. Example of Numeric Values]

An example of the feature information generation method and the anomaly detection method according to the present disclosure will be described with reference to a simple example. In this example, provided that two operational conditions (y1, y2) are data items of the process data matrix, an optimum feature information that represents the normal state of the process is first obtained from past normal process data using NMF according to the feature information generation method shown in Figure 4. The optimum feature information is obtained by using the normal process data shown in Table 1 below.

### [Table 1]

**Table 1**

| No. | OPERATIONAL CONDITION (y1) | OPERATIONAL CONDITION (y 2) |
|---|---|---|
| 1 | 160 | 8 2 |
| 2 | 200 | 98. 5 |
| 3 | 180 | 6 1 |
| 4 | 165 | 5 5 |
| 5 | 192 | 6 6 |
| 6 | 171 | 59. 3 |
| 7 | 180 | 6 1. 4 |

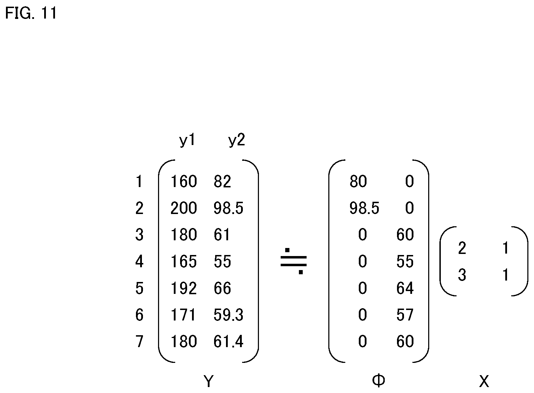

In obtaining the optimum feature information, first, the normal process data in Table 1 above is represented by a past data matrix Y. In this example, the past data matrix Y is a matrix with T rows and M columns, the rows indicating a specific number (T = 7) that corresponds to the time at which the process data is obtained, and the columns indicating the operational conditions (y1, y2) (M = 2) (Y ∈ R^{(T, M)}). Then, the past data matrix Y is approximated as a matrix product of the coefficient matrix Φ and the operational state matrix X (Y ≈ Φ•X). For example, if the number of categories N = 2, the input data matrix Y is approximated as a matrix product of the coefficient matrix Φ and the operational state matrix X (Y ≈ Φ•X) using NMF, as shown in Figure 11. Here, the coefficient matrix Φ and the operational state matrix X shown in Figure 11 are optimum feature information found in the feature information generation method shown in Figure 4.

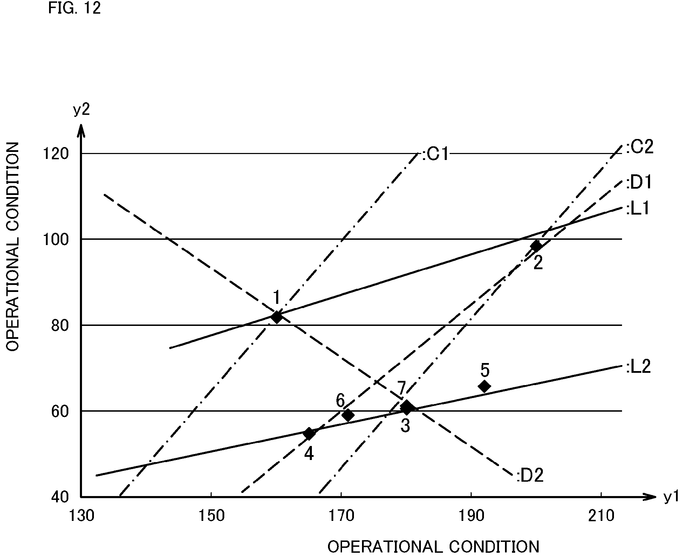

Each row of the operational state matrix X, which is a feature matrix, indicates a directional vector that is feature information of normal process data having the same process characteristic. That is, as shown in Figure 12, data No. 1 and No. 2 assume values on a straight line L1 of a directional vector (2, 1), and data No. 3 to No. 7 assume values on a straight line L2 of a directional vector (3, 1). Note that since each column of matrix elements Φⱼ of the coefficient matrix Φ obtained using NMF represents a class that corresponds to a process characteristic, the process data is considered to belong to the class of the column having the largest value. Thus, it can be seen that each matrix element Φⱼ of the coefficient matrix Φ represents a class to which the process data at the relevant point in time belongs, and the process characteristic can be automatically identified.

In the feature information generation method according to the present disclosure, optimum feature information is searched for by generating candidates of feature information by approximating the past data matrix Y as matrix products (Y ≈ Φ•X) of various coefficient matrices Φ and the operational state matrix X. For example, as shown in Figure 12, candidates of feature information includes feature information that is a combination of a directional vector of a straight line C1 and a directional vector of a straight line C2 and a feature information that is a combination of a directional vector of a straight line D1 and a directional vector of a straight line D2. From such various feature information representing the normal process data, feature information that properly represents a primary feature of the normal process data is searched for and adopted as optimum feature information.

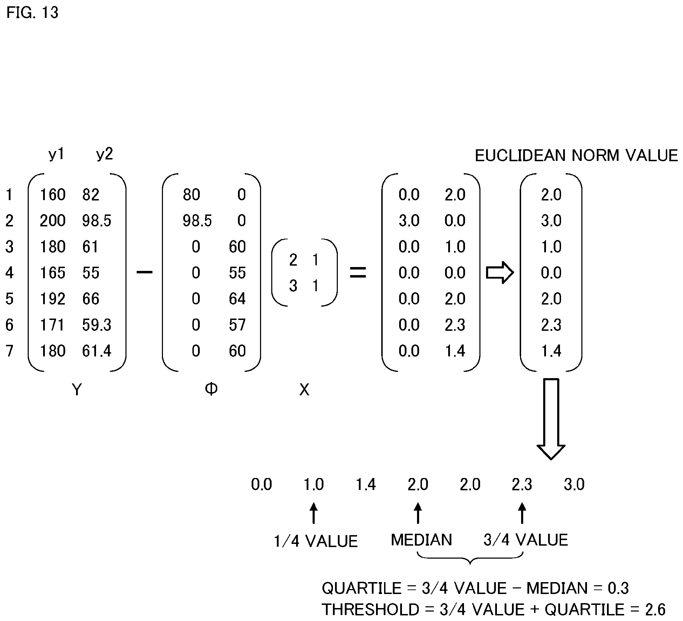

In order to calculate an evaluation threshold in the optimum feature information searched for, for example, as shown in Figure 13, the difference between the past data matrix Y and the matrix product of the coefficient matrix Φ and the operational state matrix X (Y - Φ•X) is calculated, and a Euclidean norm value is determined for each row thereof. Then, an evaluation threshold is calculated using quartiles of angular Euclidean norm values, for example. As shown in Figure 13, Euclidean norm values of data No. 1 to No. 7 are 0.0, 1.0, 1.4, 2.0, 2.0, 2.3 and 3.0, and the median is 2.0. Provided that the evaluation threshold is the sum of the difference between the third quartile and the median and the third quartile, for example, the evaluation threshold is 2.3 + 0.3 = 2.6. Note that in this example, the number of threshold-exceeding records for which the Euclidean norm value exceeds the evaluation threshold is 1.

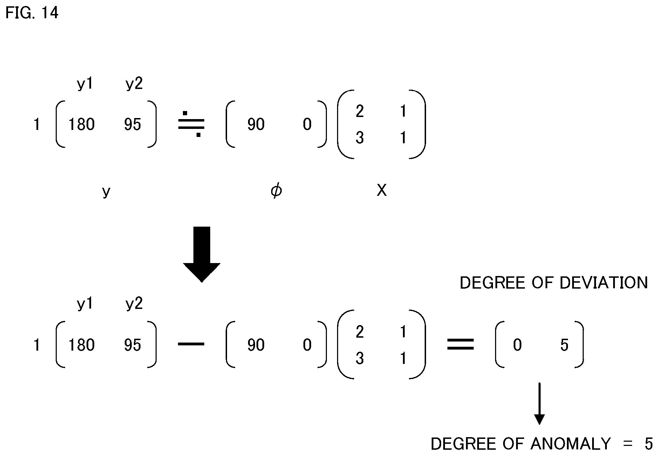

Then, based on the obtained optimum feature information, the degree of anomaly of the process at a point in time is calculated from the process data obtained at the point in time in the anomaly detection method shown in Figure 9. For example, it is assumed that process data having operational conditions y1 = 180 and y2 = 95 is obtained. In this case, a coefficient matrix ϕ is calculated from a process data matrix y with one row and M columns that represents the obtained process data and the operational state matrix X obtained as optimum feature information, and the calculated coefficient matrix ϕ is a coefficient matrix ϕ with one row and two columns including ϕ1 = 90 and ϕ2 = 0, as shown in Figure 14.

After that, a Reconstruction Error (y - Φ•X) is calculated, and the absolute value thereof (|y - φ•X|) is calculated as the degree of anomaly. The Reconstruction Error is a component representation of the degree of anomaly on a data item basis and referred to also as the degree of deviation. In the example in Figure 14, for example, the Reconstruction Error (degree of deviation) is 0, which means no deviation from the normal state, for the operational condition y1 and is 5, which means a deviation from the normal state, for the operational condition y2. In this case, the absolute value of the Reconstruction Error is 5.

Note that the degree of deviation may be represented by the vector from the center of gravity of the normal process data to the determination-target process data shown in Figure 10. In this case, since the process data matrix y has the same process characteristic as the data No. 1 and No. 2, the degree of deviation can be determined by using a mean vector (180 90.25) of the data No. 1 and No. 2 as the center of gravity G. In this case, the degree of deviation is (0 4.75) (= (180 95) - (180 90.25)).

As described above, by using the feature information generation method and the anomaly detection method according to the present disclosure, feature information for a plurality of process characteristics of a process can be automatically obtained by decomposing normal process data used for generation of feature information into non-negative matrices using NMF. Furthermore, an anomaly of a process is detected by determining how the process at the time when the process data is obtained deviates from the normal state based on the feature information that corresponds to the process characteristics at the time when the process data is obtained. In this way, the anomaly of the process can be detected using feature information that corresponds to the process characteristics of the obtained process data without clustering the process data according to the process characteristics, and the anomaly can be accurately detected.

### [3. Hardware Configuration]

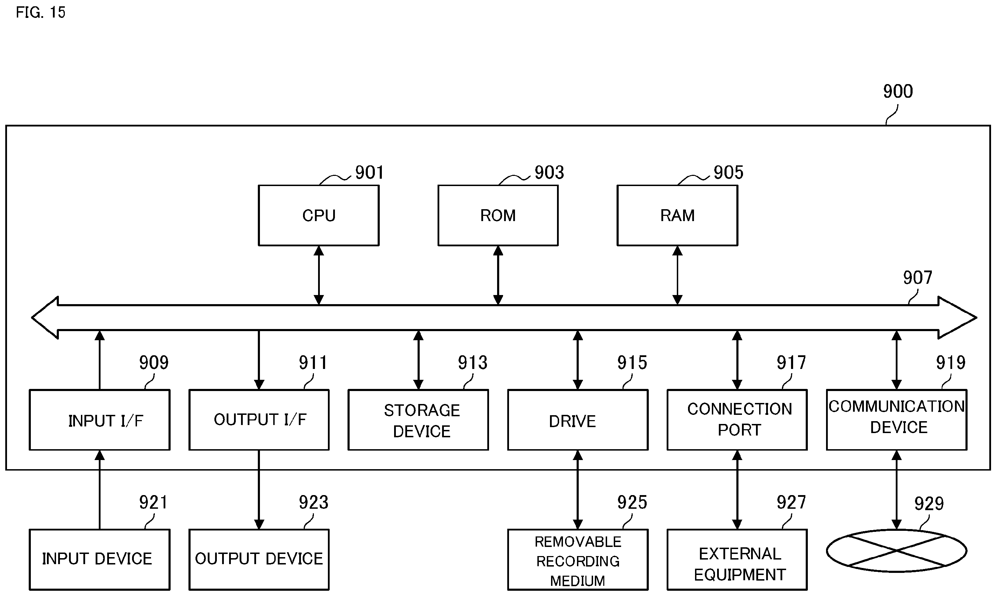

With reference to Figure 15, hardware configurations of the feature information generation device 100 and the anomaly detection device 200 according to the present disclosure will be described. Figure 15 is a block diagram showing an example of a hardware configuration of an information processing device 900 that functions as the feature information generation device 100 or the anomaly detection device 200 according to the present disclosure.

The information processing device 900 includes one or more hardware processors, such as a CPU 901, and one or more memories, such as a random access memory (RAM) 905 and a read only memory (ROM) 903, and performs various arithmetic operations by the one or more hardware processors executing one or more programs stored in the memories. The information processing device 900 further includes a bus 907, an input I/F 909, an output I/F 911, a storage device 913, a drive 915, a connection port 917 and a communication device 919.

For example, the CPU 901 functions as an arithmetic processing device and a control unit. The CPU 901 controls all or part of the operations in the information processing device 900 according to various programs recorded in the ROM 903, the RAM 905, the storage device 913 or a removable recording medium 925. The ROM 903 stores a program, an arithmetic parameter or the like used by the CPU 901. The RAM 905 temporarily stores a program used by the CPU 901 or a parameter or the like that changes as required during execution of the program. These components are interconnected by the bus 907, which is formed by an internal bus, such as a CPU bus. The bus 907 is connected to an external bus, such as a peripheral component interconnect/interface (PCI) bus or PCI Express (registered trademark), via a bridge.

Note that the arithmetic processing device and the control unit may be implemented by a programmable logic controller (PLC) or dedicated hardware, such as an application specific integrated circuit (ASIC), rather than the CPU 901.

The input I/F 909 is an interface that receives an input from an input device 921, which is operation means operated by a user, such as a mouse, a keyboard, a touch panel, a button, a switch and a lever. The input I/F 909 is configured as an input control circuit or the like that generates an input signal based on information input by the user via the input device 921 and outputs the input signal to the CPU 901, for example. The input device 921 may be a remote control device using infrared rays or other radio waves or may be external equipment 927, such as a PDA, that supports operation of the information processing device 900, for example. The user of the information processing device 900 can operate the input device 921 to input various kinds of data to the information processing device 900 or instruct the information processing device 900 to perform a processing operation.

The output I/F 911 is an interface for outputting the input information to an output device 923 that can notify the user of the input information in a visual or auditory manner. The output device 923 may be a display device, such as a CRT display device, a liquid crystal display device, a plasma display device, an EL display device or a lamp. Alternatively, the output device 923 may be a sound output device, such as a speaker or a headphone, a printer, a mobile communication terminal, a facsimile or the like. The output I/F 911 instructs the output device 923 to output a processing result obtained in various kinds of processing performed by the information processing device 900, for example. Specifically, the output I/F 911 instructs the display device to display a processing result from the information processing device 900 in the form of a text or image. Alternatively, the output I/F 911 instructs the sound output device to convert an audio signal, such as audio data, that the sound output device is instructed to reproduce, into an analog signal and output the analog signal.

The storage device 913 is one of storage units of the information processing device 900 and is a device for storing data. The storage device 913 is a non-temporary, tangible computer-readable recording medium. The storage device 913 is formed by a magnetic storage device, such as a hard disk drive (HDD), a semiconductor storage device, such as a solid state drive (SSD), an optical storage device or a magnetooptical storage device, for example. The storage device 913 stores the program to be executed by the CPU 901, various kinds of data generated as a result of execution of the program, and various kinds of data externally obtained, for example.

The drive 915 is a reader/writer for a recording medium and is internal or external to the information processing device 900. The drive 915 reads information recorded in the removable recording medium 925 inserted therein and outputs the information to the RAM 905. Furthermore, the drive 915 can write information to the removable recording medium 925 inserted therein. The removable recording medium 925 is a magnetic disk, an optical disk, a magnetooptical disk or a semiconductor memory, for example. Specifically, the removable recording medium 925 may be a CD medium, a DVD medium, a Blue-ray (registered trademark) medium, CompactFlash (CF) (registered trademark), a flash memory, a secure digital memory card (SD memory card) or the like. Furthermore, the removable recording medium 925 may be an integrated circuit card (IC card) with a contactless IC chip mounted thereon or electronic equipment, for example.

The connection port 917 is a port for directly connecting equipment to the information processing device 900. The connection port 917 is an universal serial bus (USB) port, an external serial advanced technology attachment (eSATA), or a serial attached small computer system interface (SCSI) (SAS) port, for example. The information processing device 900 can directly obtain various kinds of data from the external equipment 927 connected to the connection port 917 or provide various kinds of data to the external equipment 927. For example, an alarm notification device, such as a rotating lamp, that notifies of alarm information may be connected via the connection port 917. Furthermore, a network attached storage (NAS) may be connected as the external equipment 927 and used as a storage device.

The communication device 919 is a communication interface formed by a communication device or the like to connect a communication network 929, for example. The communication device 919 is a communication card or the like for a wired or wireless local area network (LAN), Bluetooth (registered trademark) or wireless USB (WUSB), for example. Alternatively, the communication device 919 may be a router for optical communication, a router for asymmetric digital subscriber line (ADSL), or a modem for various types of communication, for example. The communication device 919 can transmit and receive a signal or the like to and from the Internet or other communication equipment according to a predetermined protocol, such as TCP/IP. For example, a computer for operating the information processing device 900 may be connected via the communication device 919. Furthermore, the communication network 929 connected to the communication device 919 is formed by a network connected thereto in a wired or wireless manner. For example, the communication network 929 is the Internet, a home LAN, infrared communication, radio wave communication or satellite communication.

An example of the hardware configuration of the information processing device 900 has been shown above. Each component described above may be formed by a general-purpose member or formed by hardware dedicated for the function of the component. The hardware configuration of the information processing device 900 can be adapted to the technical level in the actual implementation of the present disclosure as required.

Although preferred embodiments of the present disclosure have been described in detail with reference to the accompanying drawings, the present disclosure is not limited to the embodiments. It will be obviously understood that those having ordinary knowledge in the art to which the present disclosure pertains can make various variations and modifications without departing from the scope of the technical spirit described in the claims, and of course, the variations and the modifications are included in the technical scope of the present disclosure.

For example, the anomaly detection device may be provided in a plant system that includes a plant having a process having a plurality of process characteristics, rather than being provided in the anomaly detection system that detects an anomaly that occurs in a process. The plant system includes a plant having various operational conditions, such as a steel plant, a chemical plant, a power generation plant or a power plant, and a control unit provided with a processor that controls the plant controls a process of the plant. In the plant system, the anomaly detection device can calculate the degree of anomaly or the degree of deviation. In the plant system, the plant is controlled based on the calculated degree of anomaly or degree of deviation.

For example, the process data changes in response to a change of an operational condition of the plant, such as a manipulated amount of the plant or the type of an operating facility. As the process data input to the anomaly detection device changes, the degree of anomaly and the degree of deviation output by the anomaly detection device based on the process data change. Therefore, according to the present disclosure, the degree of anomaly can be reduced by appropriately modifying an operational condition of the plant within facility constraints. In addition, an operational condition of the plant that causes an increase of the degree of anomaly can be identified from the degree of deviation output from the anomaly detection device. By appropriately modifying the identified operational condition that causes the increase of the degree of anomaly within facility constraints, the degree of deviation can be reduced, and thus the degree of anomaly can be reduced.

As described above, the plant system controls the plant based on the degree of anomaly or the degree of deviation calculated by the anomaly detection device. For example, the plant system modifies an operational condition of the process, such as changing an operating facility, thereby controlling the plant so that the process normally operates. In this way, damage to the plant can be prevented.

Note that the configurations described below are included in the technical scope of the present disclosure.
(1) An anomaly detection device including:
   a process data obtaining unit that obtains process data of a process having a plurality of process characteristics; and
   an anomaly detection unit that detects an anomalous state of the process based on a degree of anomaly that indicates a difference between the obtained process data and a normal state of the process represented by feature information that represents a feature of normal process data for each of the process characteristics,
   wherein the feature information that represents the normal state of the process is optimum feature information for each of the process characteristics found by evaluating a candidate of feature information based on an error between the normal process data and estimated process data calculated using the candidate of feature information, the candidate of feature information being generated for each of the process characteristics from a plurality of items of normal process data obtained when the process is in the normal state.
(2) The anomaly detection device according to (1) described above, wherein the anomaly detection unit
   obtains a coefficient matrix that represents feature information of the process data by factorizing a matrix that represents the obtained process data with a feature matrix that represents the feature information that represents the feature of the normal process data of the process, and
   calculates the degree of anomaly based on the matrix that represents the process data, the feature matrix and the coefficient matrix.
(3) The anomaly detection device according to (1) or (2) described above, wherein the degree of anomaly is a distance between a value of the process data and a hyperplane that represents the normal state of the process by feature information that represents a feature of normal process data for each of the process characteristics.
(4) The anomaly detection device according to (3) described above, wherein the anomaly detection unit calculates a degree of deviation that represents the degree of anomaly for each operational condition of the process data.
(5) The anomaly detection device according to any one of (1) to (4) described above, further including:
   a processing unit that generates the feature information that represents the normal state of the process,
   wherein the processing unit includes:
      a feature information generation unit that generates, from a plurality of items of normal process data obtained when a process having a plurality of process characteristics is in a normal state, a candidate of feature information that represents a feature of the normal process data for each of the process characteristics; and
      a search unit that searches for optimum feature information for each of the process characteristics by evaluating the candidate of feature information based on an error between the normal process data and estimated process data calculated using the candidate of feature information.
(6) The anomaly detection device according to (5) described above, wherein the search unit
   calculates an evaluation threshold from a quartile of the error, and
   evaluates the feature information based on a number of items of normal process data that exceeds the evaluation threshold.
(7) The anomaly detection device according to (6) described above, wherein the search unit searches for feature information for which the number of items of normal process data that exceeds the evaluation threshold is the smallest as the optimum feature information.
(8) A plant system including: a plant having a process having a plurality of process characteristics; and the anomaly detection device according to any one of (1) to (7) described above,
   wherein the anomaly detection device calculates the degree of anomaly or a degree of deviation that represents the degree of anomaly for each operational condition of the process data, and
   the plant system controls the plant based on the degree of anomaly or the degree of deviation.
(9) An anomaly detection method including:
   a process data obtaining step of obtaining process data of a process having a plurality of process characteristics; and
   an anomaly detection step of detecting an anomalous state of the process based on a degree of anomaly that indicates a difference between the obtained process data and a normal state of the process represented by feature information that represents a feature of normal process data for each of the process characteristics,
   wherein the feature information that represents the normal state of the process is optimum feature information for each of the process characteristics found by evaluating a candidate of feature information based on an error between the normal process data and estimated process data calculated using the candidate of feature information, the candidate of feature information being generated for each of the process characteristics from a plurality of items of normal process data obtained when the process is in the normal state.
(10) The anomaly detection method according to (9) described above, wherein in the anomaly detection step,
   a coefficient matrix that represents feature information of the process data is obtained by factorizing a matrix that represents the obtained process data with a feature matrix that represents the feature information that represents the feature of the normal process data of the process, and
   the degree of anomaly is calculated based on the matrix that represents the process data, the feature matrix and the coefficient matrix.
(11) The anomaly detection method according to (9) or (10) described above, wherein the degree of anomaly is a distance between a value of the process data and a hyperplane that represents the normal state of the process by feature information that represents a feature of normal process data for each of the process characteristics.
(12) The anomaly detection method according to (11) described above, wherein in the anomaly detection step, a degree of deviation that represents the degree of anomaly for each operational condition of the process data is calculated.
(13) The anomaly detection method according to any one of (9) to (12) described above,
   wherein as processing for generating the feature information that represents the normal state of the process, the anomaly detection method includes:
   a feature information generation step of generating, from a plurality of items of normal process data obtained when a process having a plurality of process characteristics is in a normal state, a candidate of feature information that represents a feature of the normal process data for each of the process characteristics; and
   a search step of searching for optimum feature information for each of the process characteristics by evaluating the candidate of feature information based on an error between the normal process data and estimated process data calculated using the candidate of feature information.
(14) The anomaly detection method according to (13) described above, wherein in the search step,
   an evaluation threshold is calculated from a quartile of the error, and
   the feature information is evaluated based on a number of items of normal process data that exceeds the evaluation threshold.
(15) The anomaly detection method according to (14) described above, wherein in the search step, feature information for which the number of items of normal process data that exceeds the evaluation threshold is the smallest is searched for as the optimum feature information.
(16) A program that makes a computer function as
   an anomaly detection device including:
   a process data obtaining unit that obtains process data of a process having a plurality of process characteristics; and
   an anomaly detection unit that detects an anomalous state of the process based on a degree of anomaly that indicates a difference between the obtained process data and a normal state of the process represented by feature information that represents a feature of normal process data for each of the process characteristics,
   wherein the feature information that represents the normal state of the process is optimum feature information for each of the process characteristics found by evaluating a candidate of feature information based on an error between the normal process data and estimated process data calculated using the candidate of feature information, the candidate of feature information being generated for each of the process characteristics from a plurality of items of normal process data obtained when the process is in the normal state.
(17) The program according to (16) described above, wherein the anomaly detection unit
   obtains a coefficient matrix that represents feature information of the process data by factorizing a matrix that represents the obtained process data with a feature matrix that represents the feature information that represents the feature of the normal process data of the process, and
   calculates the degree of anomaly based on the matrix that represents the process data, the feature matrix and the coefficient matrix.
(18) The program according to (16) or (17) described above, wherein the degree of anomaly is a distance between a value of the process data and a hyperplane that represents the normal state of the process by feature information that represents a feature of normal process data for each of the process characteristics.
(19) The program according to (18) described above, wherein the anomaly detection unit calculates a degree of deviation that represents the degree of anomaly for each operational condition of the process data.
(20) The program according to any one of (16) to (19) described above,
   wherein the program makes a computer function as an anomaly detection device that includes a processing unit that generates the feature information that represents the normal state of the process, and
   the processing unit includes:
      a feature information generation unit that generates, from a plurality of items of normal process data obtained when a process having a plurality of process characteristics is in a normal state, a candidate of feature information that represents a feature of the normal process data for each of the process characteristics; and
      a search unit that searches for optimum feature information for each of the process characteristics by evaluating the candidate of feature information based on an error between the normal process data and estimated process data calculated using the candidate of feature information.
(21) The program according to (20) described above, wherein the search unit
   calculates an evaluation threshold from a quartile of the error, and evaluates the feature information based on the number of items of normal process data that exceeds the evaluation threshold.
(22) The program according to (21) described above, wherein the search unit searches for feature information for which the number of items of normal process data that exceeds the evaluation threshold is the smallest as the optimum feature information.

### REFERENCE SIGNS LIST

- 1: anomaly detection system
- 10: process
- 30: process data storage unit
- 100: feature information generation device
- 110: feature information generation unit
- 120: search unit
- 200: anomaly detection device
- 210: process data obtaining unit
- 220: anomaly detection unit
- 300: feature information storage unit
- 500: terminal
- 900: information processing device
- 901: CPU
- 903: ROM
- 905: RAM
- 907: bus
- 909: input I/F
- 911: output I/F
- 913: storage device
- 915: drive
- 917: connection port
- 919: communication device
- 921: input device
- 923: output device
- 925: removable recording medium
- 927: external equipment
- 929: communication network

## Claims

1. An anomaly detection device comprising:
a process data obtaining unit that obtains process data of a process having a plurality of process characteristics; and
an anomaly detection unit that detects an anomalous state of the process based on a degree of anomaly that indicates a difference between the obtained process data and a normal state of the process represented by feature information that represents a feature of normal process data for each of the process characteristics,
wherein the feature information that represents the normal state of the process is optimum feature information for each of the process characteristics found by evaluating a candidate of feature information based on an error between the normal process data and estimated process data calculated using the candidate of feature information, the candidate of feature information being generated for each of the process characteristics from a plurality of items of normal process data obtained when the process is in the normal state.

2. The anomaly detection device according to claim 1, wherein the anomaly detection unit
obtains a coefficient matrix that represents feature information of the process data by factorizing a matrix that represents the obtained process data with a feature matrix that represents the feature information that represents the feature of the normal process data of the process, and
calculates the degree of anomaly based on the matrix that represents the process data, the feature matrix and the coefficient matrix.

3. The anomaly detection device according to claim 1 or 2, wherein the degree of anomaly is a distance between a value of the process data and a hyperplane that represents the normal state of the process by feature information that represents a feature of normal process data for each of the process characteristics.

4. The anomaly detection device according to claim 3, wherein the anomaly detection unit calculates a degree of deviation that represents the degree of anomaly for each operational condition of the process data.

5. A plant system comprising: a plant having a process having a plurality of process characteristics; and the anomaly detection device according to any one of claims 1 to 4,
wherein the anomaly detection device calculates the degree of anomaly or a degree of deviation that represents the degree of anomaly for each operational condition of the process data, and
the plant system controls the plant based on the degree of anomaly or the degree of deviation.

6. A feature information generation device comprising:
a feature information generation unit that generates, from a plurality of items of normal process data obtained when a process having a plurality of process characteristics is in a normal state, a candidate of feature information that represents a feature of the normal process data for each of the process characteristics; and
a search unit that searches for optimum feature information for each of the process characteristics by evaluating the candidate of feature information based on an error between the normal process data and estimated process data calculated using the candidate of feature information.

7. The feature information generation device according to claim 6, wherein the search unit
calculates an evaluation threshold from a quartile of the error, and
evaluates the feature information based on a number of items of normal process data that exceeds the evaluation threshold.

8. The feature information generation device according to claim 7, wherein the search unit searches for feature information for which the number of items of normal process data that exceeds the evaluation threshold is the smallest as the optimum feature information.

9. An anomaly detection method comprising:
a process data obtaining step of obtaining process data of a process having a plurality of process characteristics; and
an anomaly detection step of detecting an anomalous state of the process based on a degree of anomaly that indicates a difference between the obtained process data and a normal state of the process represented by feature information that represents a feature of normal process data for each of the process characteristics,
wherein the feature information that represents the normal state of the process is optimum feature information for each of the process characteristics found by evaluating a candidate of feature information based on an error between the normal process data and estimated process data calculated using the candidate of feature information, the candidate of feature information being generated for each of the process characteristics from a plurality of items of normal process data obtained when the process is in the normal state.

10. A feature information generation method comprising:
a feature information generation step of generating, from a plurality of items of normal process data obtained when a process having a plurality of process characteristics is in a normal state, a candidate of feature information that represents a feature of the normal process data for each of the process characteristics; and
a search step of searching for optimum feature information for each of the process characteristics by evaluating the candidate of feature information based on an error between the normal process data and estimated process data calculated using the candidate of feature information.

11. A program that makes a computer function as
an anomaly detection device comprising:
a process data obtaining unit that obtains process data of a process having a plurality of process characteristics; and
an anomaly detection unit that detects an anomalous state of the process based on a degree of anomaly that indicates a difference between the obtained process data and a normal state of the process represented by feature information that represents a feature of normal process data for each of the process characteristics,
wherein the feature information that represents the normal state of the process is optimum feature information for each of the process characteristics found by evaluating a candidate of feature information based on an error between the normal process data and estimated process data calculated using the candidate of feature information, the candidate of feature information being generated for each of the process characteristics from a plurality of items of normal process data obtained when the process is in the normal state.

12. A program that makes a computer function as
a feature information generation device comprising:
a feature information generation unit that generates, from a plurality of items of normal process data obtained when a process having a plurality of process characteristics is in a normal state, a candidate of feature information that represents a feature of the normal process data for each of the process characteristics; and
a search unit that searches for optimum feature information for each of the process characteristics by evaluating the candidate of feature information based on an error between the normal process data and estimated process data calculated using the candidate of feature information.
